# EUROPEAN PATENT APPLICATION

(11) **EP 2 963 183 A1**
(43) Date of publication of application: **06.01.2016**
(21) Application number: 14174975.4
(22) Date of filing: 30.06.2014
(51) Int. Cl.: E02B 17/02, E02D 27/42

(54) **Offshore support structure, offshore tower installation with the offshore support structure and offshore wind power plant with the offshore tower installation**

(71) Applicant: Siemens Aktiengesellschaft, 80333 München (DE)
(72) Inventor: Stiesdal, Henrik, 5000 Odense C (DK)

(57) **Abstract**

An offshore support structure is provided comprising at least one upper support structure section for supporting at least one functional device with a functional mass, at least one lower support structure section for founding the offshore support structure at a seabed of a sea and at least one transition support structure section which is arranged between the upper support structure section and the lower support structure section for physically connecting the upper support structures section and the lower support structure section. The upper support structure section, the functional device and the transition support structure section comprise together an upper support structure mass. The lower support structure section comprises a lower support structure mass. A mass ratio of the lower support structure mass to the upper support structure mass is selected from the range from 1.1 to 2. The lower support structure section forms a foundation of a offshore tower installation. The lower support structure section of is arranged at a seabed of a sea. Preferably, it is arranged such that the transition support structure section remains arranged above a sea water level (surface of water) of the sea. Thereby, tides which affect the sea water level have to be taken into account as well as a height of the highest waves. With such an arrangement it is possible that the transition support structure section is developed with a lower mass in comparison to an arrangement where the transition support structure section is in the water. Buoyancy force doesn't affect the gravity foundation function of the transition support structure section. The offshore tower installation is used for offshore wind power plants.

## Description

### BACKGROUND OF THE INVENTION

### 1. FIELD OF THE INVENTION

The present invention refers to an offshore support structures, an offshore tower installation with the offshore support structure and an offshore wind power plant with the offshore tower installation.

### 2. DESCRIPTION OF THE RELATED ART

Offshore support structures are used for diverse offshore tower installations. For instance, such an offshore tower installation is an offshore wind power plant or an offshore conveyer system like a gas conveyer system or an oil conveyer system.

The offshore support structure comprises at least two parts: an upper support structure section (upper substructure) for supporting a functional device of the offshore support structure, for instance a wind turbine, and a lower support structure section (lower substructure) for founding the offshore support structure at or in a seabed of a sea. For that, the lower support structure section comprises an appropriate subsea structure. Such a subsea structure comprises for instance a monopile structure, a gravity foundation structure, a tripod structure or a jacket structure.

For an offshore tower installation the subsea structure is firmly fixed to the seabed by piles, anchors, buckets or by a large gravity mass. Especially for deep water offshore installations, the firmly fixing of the subsea structure in the seabed is a challenge.

### SUMMARY OF THE INVENTION

It is an object of the invention to provide an offshore support structure with an enhanced fixing in the sea.

A further object of the invention is the providing of an offshore installation with the offshore structure as well as the providing of a wind power plant with the offshore installation.

These objects are achieved by the invention specified in the claims.

An offshore support structure is provided comprising at least one upper support structure section for supporting at least one functional device with a functional mass, at least one lower support structure section for founding the offshore support structure at a seabed of a sea and at least one transition support structure section which is arranged between the upper support structure section and the lower support structure section for physically connecting the upper support structures section and the lower support structure section. The upper support structure section, the functional device and the transition support structure section comprise together an upper support structure mass. The lower support structure section comprises a lower support structure mass. A mass ratio of the lower support structure mass to the upper support structure mass is selected from the range from 1.1 to 2. Preferably, the mass ratio is selected from the range from 1.3 to 2.

The upper support structure section, the functional device and the transition support structure have a total mass which is at least as high as the mass of the lower support structure section. Preferably, the total mass of the upper support structure section, the functional device and the transition support structure is higher than the mass of the lower support structure.

In a preferred embodiment the transition support structure section comprises at least one gravitational mass of at least 500 t. Preferably, the gravitational mass comprises at least 1000 t.

The upper support structure section and the lower support structure section are connected together via the transition support structure section. The transition support structure section is a specific piece or a specific zone between the upper support structure section and the lower support structure section. The transition support structure section is sandwiched between the upper support structure section and the lower support structure section.

The required mass for the transition support section is directly related to the functional mass of the functional device (for instance a turbine size of a wind turbine) and the wave environment on the specific location.

For instance, the lower support structure section comprises a lower support structure mass of about 950 t and the upper support structure including the upper support structure section and the transition support structure section an upper support structure mass of about 1800 t. The mass ratio is about 2. The mass ratio is about 1:2. However, scenarios are possible where the upper part is lighter because the seabed interface can obtain some tension loads and thereby end up with a ratio of 1:1,3 (the total upper structure is always 30% heavier than the lower support structure section)

Besides the offshore support structure an offshore tower installation with the offshore support structure is provided, wherein the lower support structure section forms a foundation of the offshore tower installation. The installation of the offshore support structure is used for the offshore tower installation. The lower support structure section of the offshore support structure is arranged at a seabed of a sea.

The functional device can be a platform of an offshore conveyer system like a gas conveyer system or an oil conveyer system. Preferably, the functional device is a wind turbine. (including nacelle, hub and rotor blades). The off shore construction is an offshore construction for an offshore wind turbine installation.

With the gravitational mass of more than 500 t the transition support structure section has the function of a gravity foundation of the offshore support structure or the offshore tower installation.

Preferably, the lower construction section is arranged at a seabed of a sea such that the transition support structure section remains arranged above a sea water level (surface of water) of the sea. Thereby, tides which affect the sea water level have to be taken into account as well as a height of the highest waves. With such an arrangement it is possible that the transition support structure section is developed with a lower mass in comparison to an arrangement where the transition support structure section is under the water level (in the water). Buoyancy force doesn't affect the gravity foundation function of the transition support structure section. By this measure, an increase of a stability of the complete construction by up to 60% or more is possible.

The transition support structure section can comprise different materials or different combinations thereof. In a preferred embodiment, the transition support structure section comprises concrete, for instance reinforced concrete. Concrete has the advantage that it is cheap. Moreover, concrete has a low cost per strength.

Additionally, it can variously be formed. By this, an appropriate shape of the transition support structure section is easily available. In addition, the mass of such transition section can be simply adapted. For instance, iron can be embedded into concrete for an improvement of the stability of transition support structure section as well as for changing the transition support structure section.

To sum up: By placing the concrete above the water level it can be shaped to serve other functions such as facilities for O&M (operation and maintenance) personnel. For instance, this is necessary for a safe access way to the wind turbine generator (WTG). Other functions are connected the access of spare parts and tools storage, survival cabin, and/or lunch room for the personnel, room for electrical equipment. Concerning the shape, it can comprise a cylindrical or conical tower part replacing a part or the entire steel tower.
In a preferred embodiment, the upper support structure section comprises tower. The upper support structure section with a tower is preferred for wind power installation whereas a multipile (more than one pile) structure would be preferred for other applications like a gas conveyer system or an oil conveyer system.

In a preferred embodiment, the lower support structure section comprises at least one subsea structure which is selected from the group consisting of jacket structure, monopile structure and tripod structure. These subsea structures are a component of the foundation of the lower support structure. Monopile foundations consist of a steel pile which is driven into the seabed. Tripod foundations consist of three legs comprising piles on each end which are driven into the seabed. This type is generally used at deeper depths. The jacket structure is a steel lattice structure where all parts are welded as three dimensional connections at central connection joints. It is advantageous that the jacket structure has the potential to become low-cost structure and has a high stiffness-to-material use ratio. Furthermore, it is efficient in positions with high wave loads. Besides the mentioned subsea structures other foundation structures are possible, too. For instance, the subsea structure can be developed as gravity foundation structure (gravity foundation). Gravity foundations consist of a large base made of either concrete or steel or a combination thereof. Gravity foundations are just placed at the seabed. The offshore support structure is dependent on gravity and size of footprints (area of a foot) of the gravity foundation to remain erect.

In general, gravity foundations are designed with the objective of avoiding tensile loads (lifting) between the bottom of the support structure and the seabed. This is achieved by providing sufficient dead loads and by providing sufficient footprint (base) such that the structure maintains. The structure maintains its stability in all environmental conditions by means of its own gravity and the arm (distance from center of structure to the edge). By increasing the gravity mass the footprint can be decreased as well as the other way around.

The offshore support structure can be directly arranged on the surface of the seabed of the sea or anchored to the seabed with a smaller anchoring system compared to a non gravity structure. In a preferred embodiment, the lower support structure section comprises at least one foot (with a base) for arranging the lower support structure on the seabed of the sea. The subsea structure is a combination of gravity foundation and at least one of the above mentioned subsea structures, e.g. jacket structure. The foot is a foot of the lower support structure. For instance, the lower support structure comprises a jacket structure with four legs. Every leg of this jacket structure is arranged on the seabed via a seabed interface structure either as concrete feet's potentially with steel skirts, smaller piles or buckets (passive or suction)compared to a non-gravity structure.

Concerning an additional aspect of the invention, an offshore wind power plant with at least one offshore installation is provided, wherein the functional device is a wind turbine. At least one wind turbine is supported by the upper support structure section of at least one offshore support structure. The offshore installation is used for an offshore wind power plant for transferring kinetic wind energy into electrical energy. The upper support structure section is developed to support a wind turbine.

### BRIEF DESCRIPTION OF THE DRAWINGS

Further features and advantages of the invention are produced from the description of exemplary embodiment with reference to the drawings. The drawings are schematic.
Figure 1 shows a detail of an offshore support structure.
Figure 2 shows a detail of an offshore tower installation.

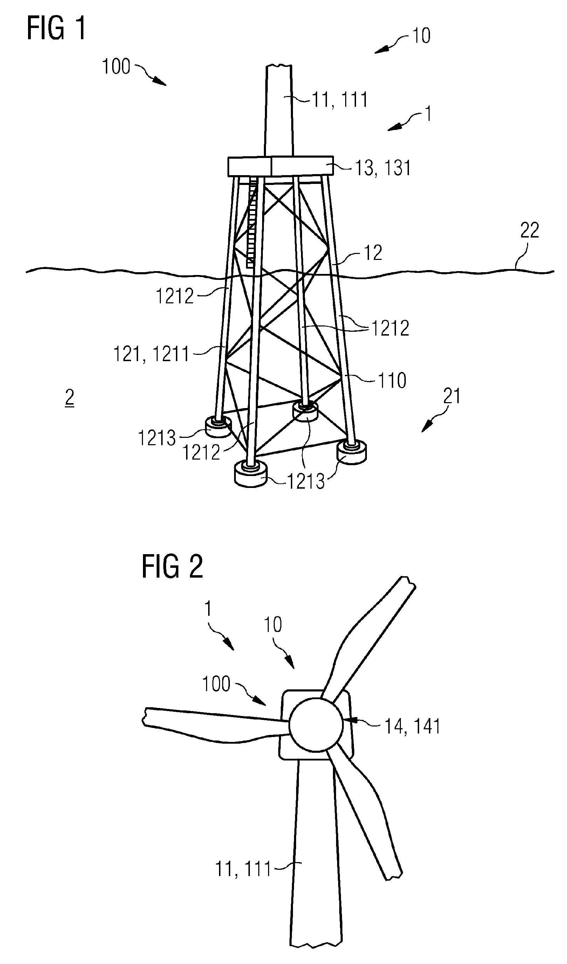

Subject matter of the example is an offshore tower installation 10 (figure 2) for an offshore wind power plant 100. The offshore tower installation is used for an offshore wind power plant 100. Thereby, kinetic wind energy is transferred into electrical energy. The offshore tower installation is used for offshore wind power plants.

The offshore tower installation 10 comprises an offshore support structure 1 (figure 1).

The offshore support structure 1 comprises an upper support structure section 11 for supporting at least one functional device 14 with a functional mass. The upper support structure section 11 comprises a tower 111. The functional device 14 is a wind turbine (including nacelle, hub and rotor blades). The wind turbine is supported by the tower 111.

The offshore support structure 1 comprises a lower support structure section 12. The lower support structure section 13 forms a foundation 110 of the offshore tower installation 10. The lower construction section comprises a subsea structure 121. The subsea structure is a jacket structure 1211 with four legs 1212. Every leg 1212 comprises a foot 1213. Via the foots 1213 the subsea structure 1211 is arranged on the seabed 21 of the sea 2. A mass of each of foot is of about 200 t.

Additionally, the offshore support structure 1 comprises a transition support structure section 13. The transition support structure section 13 is located between the upper support structure section 11 and the lower support structure section 12. With the aid of the transition support structure section 13, the upper support structure section 11 and the lower construction section 12 are physically connected together. The transition support structure section 13 is sandwiched between the upper support structure section 11 and the lower construction section 12.

The transition construction section is a kind of a platform which is arranged between the upper support structure section 11 and the lower support structure section 13.

The transition support structure section 13 comprises a gravitational mass 131 of about 1000 tons. The gravitational mass 131 of the transition support structure section 13 is made of reinforced concrete. In the reinforced concrete iron bars are incorporated into concrete for reinforcement of the concrete.

For the offshore tower installation 100 the lower construction section 12 is arranged at the seabed 21 of the sea 2 or in the seabed 21 of the sea 2 such that the transition support structure section 13 remains arranged above a sea water level (surface of the water) 22 of the sea 2. Thereby, tides an height of waves are taken into account.

With such an arrangement it is possible that the transition support structure section 13 is developed with a lower mass in comparison to an arrangement where the transition support structure section 13 is located under the water level (in the water). Buoyancy force doesn't affect the gravity foundation function of the transition support structure section 13. The resulting offshore tower installation 10 remains erected with the aid of the gravitational mass 131 of the transition support section 13.

## Claims

1. Offshore support structure (1) comprising:
- at least one upper support structure section (11) for supporting at least one functional device (14) with a functional mass;
- at least one lower support structure section (12) for founding the offshore support structure (1) at a seabed (21) of a sea (2);
and
- at least one transition support structure section (13) which is arranged between the upper support structure section (11) and the lower support structure section (12) for physically connecting the upper support structures section (11) and the lower support structure section (12), wherein
- the upper support structure section, the functional device and the transition support structure section comprise together an upper support structure mass;
- the lower support structure section comprises a lower support structure mass; and
- a mass ratio of the lower support structure mass to the upper support structure mass is selected from the range from 1 to 2.

2. Offshore support structure according to claim 1, wherein the mass ratio is selected from the range from 1.3 to 2.

3. Offshore support structure according to claim 1 or 2, wherein the transition support structure section (13) comprises at least one gravitational mass (131) of at least 500 t.

4. Offshore support structure according to claim 3, wherein the gravitational mass (131) comprises at least 1000 t.

5. Offshore support structure according to one of the claims 1 or 5, wherein the transition support structure section (13) comprises concrete.

6. Offshore support structure according to one of the claims 1 to 5, wherein the upper support structure section (11) comprises a tower (111).

7. Offshore support structure according to one of the claims 1 to 6, wherein the lower support structure section (12) comprises at least one subsea structure (121) which is selected from the group consisting of jacket structure (1211), monopile structure, tripod structure and gravity structure.

8. Offshore support structure according to one of the claims 1 to 7, wherein the lower support structure section (12) comprises at least one foot (1213) for arranging the lower support structure section (12) on the seabed (21) of the sea (2).

9. Offshore support structure according to one of the claims 1 to 8, wherein the functional device (14) is a wind turbine (141).

10. Offshore tower installation (10) with the offshore support structure according to one of the claims 1 to 9, wherein the lower support structure section (12) forms a foundation of the offshore tower installation (10).

11. Offshore tower installation (10) according to claim 10, wherein the lower support structure section (12) is arranged at a seabed (21) of a sea (2) such that the transition support structure section (13) remains arranged above a sea water level (22) of the sea (2).

12. Offshore wind power plant (100) with at least one offshore tower installation (10) according to claim 10 or 11, wherein the functional device (14) is a wind turbine (141).
